Europäisches Patentamt

European Patent Office

Office européen des brevets

(19)

(11) Veröffentlichungsnummer: **0 246 521**
**A2**

(12) **EUROPÄISCHE PATENTANMELDUNG**

(21) Anmeldenummer: **87106741.9**

(22) Anmeldetag: **08.05.87**

(51) Int. Cl.⁴: **G01B 11/10**

(30) Priorität: **20.05.86 CH 2022/86**

(43) Veröffentlichungstag der Anmeldung:
**25.11.87 Patentblatt 87/48**

(84) Benannte Vertragsstaaten:
**BE DE FR GB IT NL**

(71) Anmelder: **ZELLWEGER USTER AG**
**Wilstrasse 11**
**CH-8610 Uster(CH)**

(72) Erfinder: **Ackermann, Hans**
**Tödistrasse 16**
**CH-8712 Stäfa(CH)**

(54) **Vorrichtung zur Messung des Querschnitts oder des Volumens eines laufenden, langgestreckten Prüfguts, Vorzugsweise eines textilen Fadens.**

(57) Die Vorrichtung enthält einen Messspalt (M), eine Beleuchtungsoptik (5, 6) für den Faden an der einen und ein Objektiv (7, 8) und eine photoelektrisches Element (11) an der anderen Seite des Messspalts. Zwischen dem Messspalt (M) und der Beleuchtungsoptik (5, 6) einerseits und zwischen dem Messspalt (M) und dem Objektiv (7, 8) anderseits ist je eine Kammer (20 bzw. 21) vorgesehen, welche einen Druckluftanschluss (22) sowie eine Durchbrechung (19) zum Messspalt für den Durchtritt von Druckluft aus den Kammern in den Messspalt aufweist.

Dadurch können sich auf den Glasflächen der Beleuchtungsoptik (5, 6) und des Objektivs (7, 8) keine Verstaubungen und Verschmutzungen absetzen und die Betriebszuverlässigkeit der Vorrichtung ist wesentlich erhöht.

FIG. 3

EP 0 246 521 A2

## Vorrichtung zur Messung des Querschnitts oder des Volumens eines laufenden, langgestreckten Prüfguts, vorzugsweise eines textilen Fadens

Die Erfindung betrifft eine Vorrichtung zur Messung des Querschnitts oder des Volumens eines laufenden, langgestreckten Prüfguts, vorzugsweise eines textilen Fadens, mit einem Messspalt, mit einer Beleuchtungsoptik für den Faden an der einen, und mit einem Objektiv und einem photoelektrischen Element an der anderen Seites des Messspalts.

Derartige Vorrichtungen weisen infolge der in Textilbetrieben bekannten Staubprobleme eine gewisse Störungsanfälligkeit auf, da aufgrund der hohen Staub-und Flusenanfälle der Strahlengang zwischen Beleuchtungsoptik und Objektiv zumindest teilweise abgedeckt werden kann, so dass die Vorrichtungen die an sie gestellten Forderungen nicht mehr vollständig erfüllen können. Die Anfälligkeit der bekannten Vorrichtung auf Verstaubung und Verschmutzung kann auch nicht durch Beblasen von Beleuchtungsoptik und Objektiv vom Messspalt her verringert werden, weil sich dabei innerhalb kürzester Zeit von Avivage und vom Garnmaterial herrührende Schmutzpartikel an den Glasflächen ablagern.

Die Erfindung hat nun die Aufgabe, die bekannten optischen Messvorrichtungen so zu verbessern, dass die genannten Verschmutzungsprobleme nicht mehr auftreten und somit die Betriebszuverlässigkeit der Messvorrichtung sichergestellt ist.

Diese Aufgabe wird erfindungsgemäss dadurch gelöst, dass zwischen dem Messspalt und der Beleuchtungsoptik einerseits und zwischen dem Messspalt und dem Objektiv anderseits je eine Kammer vorgesehen ist und dass diese Kammern einen Druckluftanschluss und je eine Durchbrechung zum Messspalt für den Durchtritt von Druckluft aus der Kammer in den Messspalt aufweisen.

Praktische Versuche unter den in Textilbetrieben gegebenen Bedingungen haben überraschend ergeben, dass durch die erfindungsgemässe Lösung die bekannten Verstaubungs-und Verschmutzungsprobleme praktisch vollständig wegfallen. Und dies trotz der schlechten Resultate der bisherigen Versuche, diese Probleme durch Beblasen der Glasflächen von Beleuchtungsoptik und Objektiv vom Messspalt her zu lösen.

Nachfolgend wird die Erfindung anhand eines in den Zeichnungen dargestellten Ausführungsbeispiels näher erläutert; es zeigen:

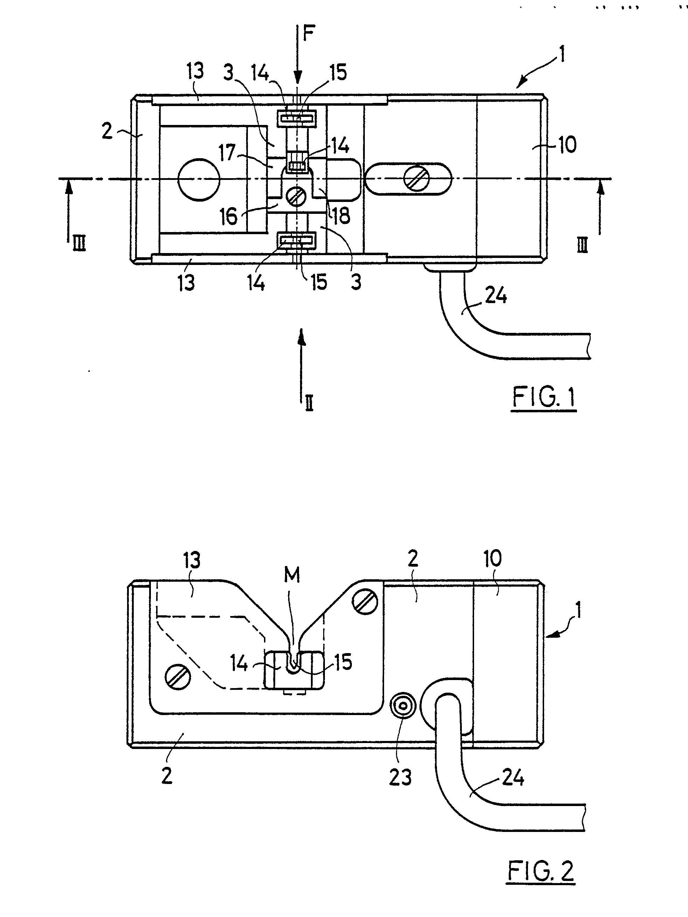

Fig. 1 eine Draufsicht auf eine erfindungsgemässe Messvorrichtung,

Fig. 2 eine Ansicht in Richtung des Pfeiles II von Fig. 1, und

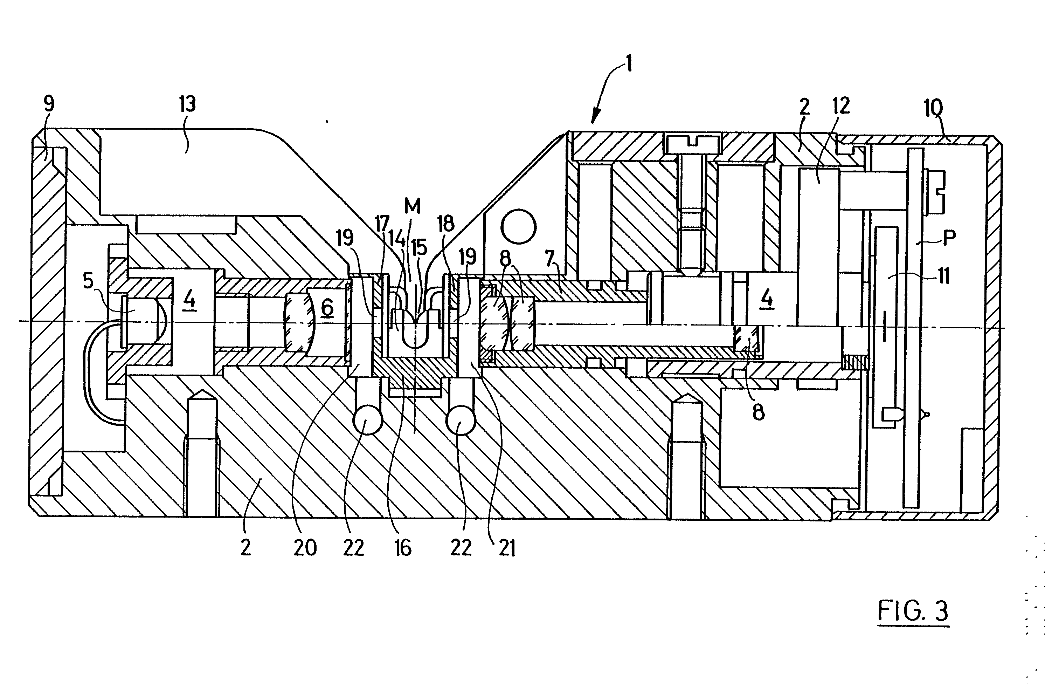

Fig. 3 einen Schnitt nach der Linie III - III von Fig. 1 in vergrössertem Massstab.

Die erfindungsgemässe Vorrichtung ist darstellungsgemäss durch einen Messkopf 1 gebildet, welcher im wesentlichen aus einem Grundkörper 2 mit einer in Fadenlaufrichtung (Pfeil F) verlaufenden U-förmigen Ausnehmung 3 und mit einer senkrecht dazu verlaufenden Bohrung 4 gebildet ist. Die Ausnehmung 3 begrenzt einen Messspalt M und in die Bohrung 4 ist zu beiden Seiten des Messspalts eine aus einer Infrarotdiode 5 und einem Kondensor 6 bestehende Beleuchtungsoptik bzw. ein aus mehreren in einem Tubus 7 angeordneten Linsen 8 bestehendes Objektiv eingesetzt. Der Kondensor 6 besteht darstellungsgemäss aus einer Linse und einer Abdeckscheibe; die letztere kann selbstverständlich auch durch eine weitere Linse ersetzt werden.

Die Bohrung 4 ist an ihrer in den Figuren linken Seite bei der Infrarotdiode 5 durch eine Scheibe 9 abgedeckt, an der rechten Seite mit dem Objektiv - schliesst an den Grundkörper 2 ein kammerartiger Abschlussdeckel 10 an, welcher eine Photodiodenzeile 11 enthält. Der Print P der Photodiodenzeile 11 ist auf einem Halter 12 montiert. An den beiden die stirnseitigen Oeffnungen der Ausnehmung 3 enthaltenden Seitenflächen des Messkopfs 1 ist je ein Fadenleitblech 13 eingesetzt. Das Messprinzip des Messkopfs 1 wird hier nicht näher erläutert; es wird in diesem Zusammenhang auf das CH-Patent Nr. 652 205 verwiesen.

Der Messspalt M ist durch drei in die Ausnehmung 3 eingesetzte Führungselemente 14 mit je einer Kerbe 15 gebildet. Die Kerbe 15 ist in einer Scheibe aus Sinterkeramik enthalten und ist an ihrer Unterseite V-förmig, mit einem Radius im Kerbengrund, ausgebildet. In den Kerben 15 der drei Führungselemente 14 ist der zu vermessende Faden in einer definierten Stellung im Strahlengang des optischen Messsystems geführt.

Im Bereich des mittleren Führungselements 14, welches in Fadenlaufrichtung F unmittelbar vor dem den Messspalt M kreuzenden Strahlenbündel des optischen Messystems angeordnet ist, ist in die Ausnehmung 3 ein Element 16 mit U-förmigem Querschnitt eingesetzt. Dieses schliesst mit seinen Seitenwänden 17 und 18 die Bohrung 4 zwischen Messspalt M und Kondensor 6 bzw. der benachbarten Objektivlinse 8 ab. Die Seitenwände 17 und 18 weisen je eine Durchbrechung 19 für den Durchtritt des Strahlenbündels auf und sind so ausgebildet, dass vor dem Kondensor 6 bzw. der genannten Objektivlinse 8 je eine an ihrem Rand nach drei Seiten abgeschlossene Kammer 20 bzw.

21 gebildet ist. An ihrer vierten Seite, darstellungsgemäss an der Unterseite im Grund des Messspalts M, sind die Kammern 20 und 21 je an eine gemeinsame Druckluftleitung 22 angeschlossen, welche an einen Druckluftanschluss 23 an einer der Seitenflächen des Messkopfs 1 geführt ist. Von dieser Seitenfläche zweigt darstellungsgemäss auch ein die elektrischen Anschlüsse aufweisendes Kabel 24 ab.

Im Betrieb des Messkopfs 1 ist der Druckluftanschluss 23 an Druckluft mit einem Druck von etwa 0,3 Bar angeschlossen. Die Druckluft gelangt über die Druckluftleitung 22 durch die Unterseite der Kammern 20 und 21 in diese, strömt durch die Durchbrechung 19, deren Querschnitt demjenigen des Strahlenbündels des optischen Messsystems angepasst ist, in den Messspalt M, streicht dabei an den die Kammern 20 und 21 abschliessenden Stirnflächen des Kondensors 6 bzw. der ersten Objektivlinse 8 vorbei und hält diese ständig von allen eventuellen Schmutz-und Staubablagerungen frei.

## Ansprüche

1. Vorrichtung zur Messung des Querschnitts oder des Volumens eines laufenden, langgestreckten Prüfguts, vorzugsweise eines textilen Fadens, mit einem Messspalt, mit einer Beleuchtungsoptik für den Faden an der einen, und mit einem Objektiv und einem photoelektrischen Element an der anderen Seite des Messspalts, dadurch gekennzeichnet, dass zwischen dem Messspalt (M) und der Beleuchtungsoptik (5, 6) einerseits und zwischen dem Messspalt und dem Objektiv (7, 8) anderseits je eine Kammer (20 bzw. 21) vorgesehen ist, und dass diese Kammern einen Druckluftanschluss (22) und je eine Durchbrechung (19) zum Messspalt für den Durchtritt von Druckluft aus der Kammer in den Messspalt aufweisen.

2. Vorrichtung nach Anspruch 1, dadurch gekennzeichnet, dass der Querschnitt der Durchbrechungen (19) an denjenigen des Strahlenbündels des optischen Messystems (5, 6, 7, 8, 11) angepasst ist, und dass die Durchbrechungen zum Durchtritt des Strahlenbündels dienen.

3. Vorrichtung nach Anspruch 2, bei welcher der Messspalt senkrecht zur Achse des Strahlenbündels angeordnet ist und mehrere miteinander fluchtende Führungen für den Faden aufweist, und das optische Messsystem in einem quer zum Messspalt verlaufenden zweiteiligen Kanal angeordnet ist, dessen einer Teil die Beleuchtungsoptik und dessen anderer Teil das Objektiv enthält, dadurch gekennzeichnet, dass zwischen die beiden Teile des Kanals (4) ein annähernd U-förmiger Bauteil (16) eingesetzt ist, dessen beide Seitenteile (17, 18) die genannten Kammern (20 bzw. 21) enthalten.

4. Vorrichtung nach Anspruch 3, dadurch gekennzeichnet, dass die beiden Seitenteile (17, 18) plattenförmig ausgebildet sind und eine die jeweilige Kammer (20 bzw. 21) bildende und gegen die Beleuchtungsoptik (5, 6) beziehungsweise gegen das Objektiv (7, 8) hin offene Vertiefung aufweisen, in welche eine Druckluftleitung (22) mündet.

5. Vorrichtung nach einem der Ansprüche 1 bis 4, dadurch gekennzeichnet, dass der Druck in den Kammern (20, 21) zwischen 0,1 und 1 Bar, vorzugsweise 0,2 bis 0,3 Bar, beträgt.

6. Vorrichtung nach Anspruch 5, dadurch gekennzeichnet, dass die Beleuchtungsoptik (5, 6) einen Kondensor (6) und das Objektiv (7, 8) mehrere Linsen (8) aufweist, und dass die dem Messspalt (M) zugewandte vorderste Kondensor-beziehungsweise Objektivfläche eine Wand der Kammer (20 bzw. 21) bildet.

7. Vorrichtung nach den Ansprüchen 3 und 6, dadurch gekennzeichnet, dass der U-förmige Bauteil (16) im Bereich einer der Führungen (14, 15) für den Faden angeordnet ist.

FIG.1

FIG.2

FIG. 3

0 246 521